# EUROPEAN PATENT SPECIFICATION

(11) **EP 3 504 986 B1**
(45) Date of publication and mention of the grant of the patent: **14.10.2020**
(21) Application number: 17843679.6
(22) Date of filing: 24.08.2017
(51) Int. Cl.: A23L 23/00, A23L 23/10, A23L 7/109

(54) **SOUP BASE**
SUPPENBASIS
BASE DE SOUPE

(30) Priority: 26.08.2016 JP 2016166194
(43) Date of publication of application: 03.07.2019
(73) Proprietor: AJINOMOTO CO., INC., Chuo-ku Tokyo 104-8315 (JP)
(72) Inventor: HIRAE, Shogo, Oura-gun Gunma 370-0523 (JP); KAWAMURA, Kohei, Oura-gun Gunma 370-0523 (JP); IMAIZUMI, Keisuke, Oura-gun Gunma 370-0523 (JP)
(74) Representative: Strehl Schübel-Hopf & Partner
(86) International application number: PCT/JP2017/030291
(87) International publication number: WO 2018/038203

(56) References cited:
- JP-A- H 025 846
- JP-A- H 067 125
- JP-A- H10 150 936
- JP-A- 2004 321 028
- JP-A- 2006 121 925
- JP-A- 2014 166 177
- JP-A- 2015 154 749
- JP-U- H0 531 592
- JP-U- H0 724 088
- US-A1- 2007 148 306

## Description

### [Technical Field]

The present invention relates to a soup base. In detail, it relates to a soup base capable of conveniently producing a soup containing a filling-wrapping dough sheet food as an ingredient.

### [Background Art]

In the circumstances where the needs of food that can be cooked conveniently in a short time is increasing and the like in recent years, the demand for instant foods etc. that can be conveniently cooked by pouring hot water and stirring as appropriate, adding water and heating by a microwave oven and the like is increasing, and so is the demand for a soup base with which soup dishes can be cooked conveniently.

On the other hand, consumer's preferences for food tend to be diversified and upgraded more and more nowadays. Thus, it is desirable that a soup base to be newly put on the market in the future can not only be cooked conveniently but also can produce unprecedented soup dishes and is provided with high quality in the convenience during cooking and distribution, as well as sensual aspects (e.g., flavor, texture, and the like) and the like.

Relating to foods that can be cooked by heating with a microwave oven etc., there have been reported a frozen soup base with ingredient for microwave use only, containing a predetermined amount of a solid ingredient (ingredient material), having a product concentration degree within a predetermined range, and suppressing occurrence of bumping (patent document 1), a soup package for microwave heating in which a soup, sausage and the like are placed in a container and the container is tightly sealed (patent document 2), a frozen sauce with an ingredient, containing particular amounts of edible fat or oil and a protein, in which the sauce emulsified in an oil-in-water type is frozen (patent document 3) and the like. However, a soup base for conveniently cooking a soup containing a filling-wrapping dough sheet food such as gyoza dumpling and the like as an ingredient (e.g., gyoza dumpling soup etc.) has not been reported to date.

### [Document List]

### [Patent documents]

patent document 1: JP-A-2000-60503
patent document 2: JP-A-2007-20455
patent document 3: JP-A-2016-7165

JPH0531592U discloses a package containing a first layer of frozen soup and a second layer, on top of the soup, including a frozen udon ball.

JP2004321028 discloses a method for producing a frozen wonton soup, comprising mixing wonton with soup, packaging and freezing. US2007/0148306 discloses a method of producing a frozen soup containing frozen particulate food material, comprising freezing the stock and particulate material and packaging.

### [SUMMARY OF THE INVENTION]

### [Problems to be Solved by the Invention]

The present invention has been made in view of the aforementioned situation, and the problem thereof to be solved is to provide a soup base that can conveniently produce a soup containing a filling-wrapping dough sheet food as an ingredient and is provided with high quality.

### [Means of Solving the Problems]

The present inventors have conducted intensive studies in relation to the above-mentioned problem and found that a soup containing a filling-wrapping dough sheet food as an ingredient can be conveniently produced by using a soup base containing a frozen soup layer integratedly attached to at least a part of the surface of a frozen filling-wrapping dough sheet food.

The present inventors have further conducted intensive studies and found that the above-mentioned soup base may be provided with at least one of the properties of (a1) being superior in the texture of the outer wrapper (dough sheet) of the filling-wrapping dough sheet food, (b1) being easily thawed during cooking, (c1) being easily taken out from a tray during cooking, and (d1) suppression of chipping of frozen soup layer during distribution etc., and the like, by setting the weight of the frozen soup layer in the soup base to fall within a predetermined range.

The present inventors have also found that the above-mentioned soup base may be provided with at least one of the properties of (a2) being superior in the taste of the soup, and (b2) suppression of melting of frozen soup layer during distribution etc., and the like, by setting the salt concentration of the frozen soup layer in the soup base to fall within a predetermined range.

In addition, the present inventors have found that the above-mentioned soup base may be provided with at least one of the properties of (a3) being superior in the texture of the outer wrapper (dough sheet) of the filling-wrapping dough sheet food, (b3) having good appearance in eating, (c3) being easily thawed during cooking, and (d3) being easily taken out from a tray during cooking and the like, by attaching the frozen soup layer in the soup base to the bottom surface of the frozen filling-wrapping dough sheet food.

The present inventors have further studied based on these findings and completed the present invention.

Therefore, the present invention provides the following.
[1] A soup base comprising a frozen filling-wrapping dough sheet food, and a frozen soup layer attached to at least a part of a surface of the frozen filling-wrapping dough sheet food, wherein the weight of the frozen soup layer is not less than 5 wt% and less than 120 wt% relative to that of the frozen filling-wrapping dough sheet food, and the salt concentration of the frozen soup layer is not less than 0.5 wt% and less than 15 wt%.
[2] The soup base of [1], wherein the surface of the frozen filling-wrapping dough sheet food has a part to which the frozen soup layer is not attached.
[3] The soup base of [1] or [2], wherein the frozen soup layer is attached to a bottom surface of the frozen filling-wrapping dough sheet food.
[4] The soup base of any one of [1] to [3], wherein the frozen filling-wrapping dough sheet food is a frozen gyoza dumpling.
[5] The soup base of any one of [1] to [4], which has a concentration degree of 1- to 30-fold.
[6] The soup base of any one of [1] to [5], which is for microwave heating.
[7] The soup base of any one of [1] to [6], wherein the frozen soup layer has a Bostwick viscosity at 75°C of not less than 8 cm/60 seconds.
[8] The soup base of any one of [1] to [7], wherein the frozen soup layer has a strain ratio, at which the soup layer is disintegrated, of not less than 0.1% as measured by a strain sweep test at 25°C.
[9] A method of producing a soup, comprising heating the soup base of any one of [1] to [8].

### [Effect of the Invention]

According to the present invention, a soup containing a filling-wrapping dough sheet food as an ingredient can be produced conveniently.

The soup base of the present invention may be provided with at least one (preferably all) of the properties of (a1) being superior in the texture of the outer wrapper (dough sheet) of the filling-wrapping dough sheet food, (b1) being easily thawed during cooking, (c1) being easily taken out from a tray during cooking, and (d1) suppression of chipping of frozen soup layer during distribution etc., and the like, since the weight of the frozen soup layer is within a predetermined range.

The soup base of the present invention may be provided with at least one (preferably all) of the properties of (a2) being superior in the taste of the soup, and (b2) suppression of melting of frozen soup layer during distribution etc., and the like, since the salt concentration of the frozen soup layer is within a predetermined range.

The soup base of the present invention may be provided with at least one (preferably all) of the properties of (a3) being superior in the texture of the outer wrapper (dough sheet) of the filling-wrapping dough sheet food, (b3) having good appearance in eating, (c3) being easily thawed during cooking, and (d3) being easily taken out from a tray during cooking and the like, since the frozen soup layer is attached to the bottom surface of the frozen filling-wrapping dough sheet food.

### [Brief Description of the Drawings]

Fig. 1 is a conceptual front view showing one embodiment of the soup base of the present invention.
Fig. 2 is a conceptual side view showing one embodiment of the soup base of the present invention.
Fig. 3 is a conceptual plane view showing one embodiment of the soup base of the present invention.
Fig. 4 is a conceptual bottom view showing one embodiment of the soup base of the present invention.
Fig. 5 is a schematical cross sectional side view of the soup base of the present invention when cut along A-A' in Fig. 1.

### [Description of Embodiments]

The soup base of the present invention is mainly characterized in that it contains a frozen filling-wrapping dough sheet food and a frozen soup layer attached to the food.

In the present invention, the "soup base" refers to a food capable of producing a soup suitable for eating by adding an appropriate amount of water as necessary followed by heating, or adding water or heated water and the like.

### [frozen filling-wrapping dough sheet food]

In the present invention, the "frozen filling-wrapping dough sheet food" refers to a filling-wrapping dough sheet food in a frozen state, and the "filling-wrapping dough sheet food" refers to a food in which an inside filling (filling) is wrapped with an outer wrapper made of a dough sheet. Specific examples of the filling-wrapping dough sheet food include gyoza dumpling, wonton dumpling, xiaolongbao dumpling, shumai dumpling, spring roll, ravioli and the like.

The materials, production method and the like of the filling-wrapping dough sheet food used in the present invention are not particularly limited, and the filling-wrapping dough sheet food may be prepared using general food materials and by a method known per se or a method analogous thereto. For example, the inside filling of the filling-wrapping dough sheet food used in the present invention can be prepared by adding seasoning and the like to meat, vegetable, seafood or the like when desired, and mixing and kneading them or the like. The dough sheet constituting the outer wrapper can be prepared by adding water, salt, fat or oil or the like to grain flour (e.g., wheat flour etc.) when desired, mixing, kneading, extending to a suitable thickness and the like. They are not limited to these methods. A method of wrapping a filling with the outer wrapper (dough sheet) is not particularly limited, and a method known per se or a method analogous thereto can be adopted according to the kind of the filling-wrapping dough sheet food and the like.

The frozen filling-wrapping dough sheet food used in the present invention preferably becomes suitable for eating by adding an appropriate amount of water as necessary and heating, or adding water or heated water and the like. The filling-wrapping dough sheet food before freezing may be subjected to a heat treatment (e.g., baking, steaming, boiling, frying in oil and the like) as appropriate.

The frozen filling-wrapping dough sheet food used in the present invention is preferably a frozen gyoza dumpling.

### [frozen soup layer]

In the present invention, the "frozen soup layer" is a frozen substance obtained by freezing a soup. In the following, a soup before becoming a frozen substance (frozen soup layer) by freezing is sometimes to be conveniently referred to as a "soup prior to freezing".

The frozen soup layer used in the present invention preferably contains salt. The salt concentration of the frozen soup layer used in the present invention is preferably not less than 0.5 wt%, more preferably not less than 1 wt%, particularly preferably not less than 1.5 wt%. When the salt concentration is not less than 0.5 wt%, the soup prepared using the soup base of the present invention does not become too thin and can provide a preferable taste. The salt concentration is preferably less than 15 wt%, more preferably not more than 10 wt%, particularly preferably not more than 5 wt%. When the salt concentration is less than 15 wt%, the melting point of the frozen soup layer does not decrease and melting of the frozen soup layer during distribution and the like can be prevented. In addition, the salty taste of the soup prepared using the soup base of the present invention does not become too strong and a preferable taste can be afforded.

In the present invention, the "salt concentration" of the frozen soup layer means the content of salt in the frozen soup layer. When the frozen soup layer contains a solid ingredient, salt contained in the solid ingredient is not included in the calculation of the salt concentration of the frozen soup.

The frozen soup layer used in the present invention may contain other soup materials in addition to salt. Examples of the soup material include, but are not limited to, meat, vegetable, seafood, seasoning (e.g., chicken powder, *umami* seasoning, soy sauce and the like), fat or oil, emulsifier, antifoaming agent, thickener, gelling agent, starch, processing starch and the like. These soup materials may be used alone, or two or more kinds thereof may be used in combination.

The frozen soup layer used in the present invention preferably contains fat or oil. The frozen soup layer used in the present invention containing fat or oil can provide a soup more superior in the flavor and taste. The fat or oil used in the present invention is not particularly limited as long as it is usable for foods. Examples thereof include vegetable oil (e.g., rapeseed oil, soybean oil, corn oil, sesame oil, palm oil, coconut oil, olive oil, rice oil, peanuts oil, sunflower oil etc.), animal fat (e.g., beef tallow, lard, chicken fat etc.), flavor oil and seasoning oil made by processing such oils and the like, with preference given to sesame oil, flavor oil, seasoning oil. These fats or oils may be used alone, or two or more kinds thereof may be used in combination.

When the frozen soup layer used in the present invention contains fat or oil, the content of the fat or oil from the aspect of taste is preferably not less than 1 wt%, more preferably not less than 5 wt%, particularly preferably not less than 10 wt%, relative to water contained in the frozen soup layer. The content is preferably not more than 30 wt%, more preferably not more than 25 wt%, particularly preferably not more than 20 wt%, relative to water contained in the frozen soup layer, at which melting of the soup can be effectively suppressed during distribution and the like.

The frozen soup layer used in the present invention preferably contains an emulsifier having an HLB value within a predetermined range. The frozen soup layer used in the present invention and containing an emulsifier having an HLB value within a predetermined range can prevent bumping during heating the soup base of the present invention by microwave heating and the like.

The HLB value of the emulsifier used in the frozen soup layer is preferably not less than 0.5, more preferably not less than 1. The HLB value of the emulsifier is preferably not more than 7, more preferably not more than 5, particularly preferably not more than 3.

The "HLB value" in the present invention shows a hydrophile-lipophile balance (hydrophile-lipophile balance) and is determined according to the calculation formula proposed by W.C. Griffin (W.C. Griffin, J. Soc. Cosmetic Chemists, 1, 311 (1949)).

The frozen soup layer used in the present invention preferably contains a thickener. The frozen soup layer used in the present invention and containing a thickener can prevent bumping during heating the soup base of the present invention by microwave heating and the like. The thickener used in the present invention is not particularly limited as long as it is for foods. Examples thereof include xanthan gum, locust bean gum, gellan gum, gum arabic, tara gum, guar gum, tamarind gum, carrageenan and the like. These thickeners may be used alone, or two or more kinds thereof may be used in combination.

When the frozen soup layer used in the present invention contains a thickener, the content of the thickener is preferably not less than 0.01 wt%, more preferably not less than 0.05 wt%, particularly preferably not less than 0.07 wt%, relative to the frozen soup layer, at which bumping of the soup can be effectively prevented. The content is preferably not more than 5 wt%, more preferably not more than 3 wt%, further preferably not more than 1 wt%, still more preferably not more than 0.5 wt%, particularly preferably not more than 0.3 wt%, relative to the frozen soup layer, at which variation in the amount of the soup prior to freezing to be filled in a tray etc. during production can be prevented.

The frozen soup layer used in the present invention preferably contains a gelling agent. The frozen soup layer used in the present invention and containing a gelling agent can prevent spillage of the soup and staining of the packaging material due to the melting of the frozen soup layer during distribution and the like, as well as variation of quality due to spillage of the soup. The frozen soup layer used in the present invention and containing a gelling agent at a particular concentration can reduce the frozen soup that entered unevenness (e.g., folds etc.) on the surface of the frozen filling-wrapping dough sheet food and remained unmelted after cooking. In the present invention, the "fold" on the surface of the frozen filling-wrapping dough sheet food refers to an overlapping portion formed by folding a part of the outer wrapper (dough sheet) of a frozen filling-wrapping dough sheet food. The gelling agent used in the present invention is not particularly limited as long as it is for food. Examples thereof include agar, gelatin, mannan, pectin and the like, with preference given to agar, gelatin. These gelling agents may be used alone, or two or more kinds thereof may be used in combination. The frozen soup layer used in the present invention particularly preferably contains agar and gelatin from the aspects of meltability during cooking and distribution resistance.

When the frozen soup layer used in the present invention contains a gelling agent, the content of the gelling agent is preferably not less than 0.5 wt%, more preferably not less than 1 wt%, particularly preferably not less than 1.5 wt%, relative to the frozen soup layer, at which distribution resistance such as suppression of melting of frozen soup layer during distribution and the like may become superior. The content is preferably not more than 15 wt%, more preferably not more than 12 wt%, further preferably not more than 10 wt%, still more preferably not more than 7 wt%, particularly preferably not more than 5 wt%, relative to the frozen soup layer, at which the frozen soup layer is easily melted during cooking. The meltability during cooking and distribution resistance of the frozen soup layer can also be improved by appropriately adjusting the protein content and Brix (soluble solids concentration) of the frozen soup layer and the like.

The water content of the frozen soup layer used in the present invention is generally 30 - 90 wt%, preferably 40 - 80 wt%, particularly preferably 50 - 70 wt%, relative to the frozen soup layer.

The frozen soup layer used in the present invention preferably has a Bostwick viscosity at 75°C of not less than a particular value. The frozen soup layer used in the present invention and having a Bostwick viscosity at 75°C of not less than a particular value can effectively reduce the frozen soup that entered unevenness on the surface of the frozen filling-wrapping dough sheet food and remained unmelted during cooking.

To be specific, the Bostwick viscosity of the frozen soup layer used in the present invention at 75°C is preferably not less than 8 cm/60 seconds, more preferably not less than 10 cm/60 seconds, particularly preferably not less than 15 cm/60 seconds. The upper limit of the Bostwick viscosity is not particularly limited and only needs to be not more than 24 cm/60 seconds which is the upper limit value measurable by the below-mentioned method.

In the present invention, the "Bostwick viscosity at 75°C" of the frozen soup layer is measured using a Bostwick viscosity meter ("Bostwick consistometer" manufactured by CSC Scientific Company) and according to the following steps (1) - (4) .

### [measurement method of Bostwick viscosity]

(1) A soup prior to freezing (50 mL) is filled in a 50-mL Falcon (registered trade mark) tube (manufactured by Corning Incorporated).
(2) The soup is steamed at 98°C for 10 min, pre-cooled at 25°C for 10 min, and subjected to a freezing treatment at -18°C.
(3) The temperature of the obtained frozen soup layer is controlled in a hot-water bath to 75°C to give a measurement sample.
(4) The measurement sample (37.5 mL) is filled in Bostwick viscosity meter ("Bostwick consistometer" manufactured by CSC Scientific Company) and the moving distance (cm) in 60 seconds is measured. The upper limit value of the moving distance is 24 cm.

The Bostwick viscosity of the frozen soup layer used in the present invention at 75°C can be adjusted by controlling the kind and content of the thickener and gelling agent contained in the frozen soup layer. Specifically, when gelatin or agar is used singly as the gelling agent, for example, the Bostwick viscosity of the frozen soup layer at 75°C can be increased by reducing the content of the gelatin or agar. When locust bean gum or carrageenan is used singly as the thickener, the Bostwick viscosity can be reduced, for example, by increasing the content of the locust bean gum or carrageenan. The Bostwick viscosity of the frozen soup layer used in the present invention at 75°C can be appropriately adjusted to a particular value by these methods or the like.

According to the present invention, a frozen soup layer having a Bostwick viscosity at 75°C of not less than a particular value can be provided. The lower limit value and the upper limit value of the Bostwick viscosity are the same as those of the frozen soup layer used for the soup base of the present invention and the preferable values are also the same.

The frozen soup layer used in the present invention preferably has a strain ratio, at which the soup layer is disintegrated, of not less than a particular value as measured by a strain sweep test at 25°C. When the frozen soup layer used in the present invention has a strain ratio not less than a particular value, melting of the frozen soup layer during distribution can be effectively suppressed.

To be specific, the strain ratio of the frozen soup layer used in the present invention, at which the soup layer is disintegrated, as measured by a strain sweep test at 25°C is preferably not less than 0.1%, more preferably not less than 1%, particularly preferably not less than 3%, most preferably not less than 10%. The upper limit of the strain ratio is not particularly limited, and the strain ratio is generally not more than 300%, preferably not more than 200%.

In the present invention, the "strain ratio, at which the soup layer is disintegrated" of the frozen soup layer is measured using a dynamic viscoelasticity measuring apparatus (manufactured by Anton Paar GmbH, Modular Compact Rheometer "MCR302") and by a strain sweep test. To be specific, the measurement method of the strain ratio at which the soup layer is disintegrated includes the following steps (i) - (v).

### [measurement method of strain ratio at which the soup layer is disintegrated]

(i) A soup prior to freezing (50 mL) is filled in a 50-mL Falcon (registered trade mark) tube (manufactured by Corning Incorporated).
(ii) The soup is steamed at 98°C for 10 min, pre-cooled at 25°C for 10 min, and subjected to a freezing treatment at -18°C.
(iii) The obtained frozen soup layer is cut out into a cylindrical shape with diameter 30 mm x thickness 1 mm to give a measurement sample.
(iv) The measurement sample sandwiched between parallel plates (diameter 25 mm) is set in the dynamic viscoelasticity measuring apparatus (Modular Compact Rheometer "MCR302" manufactured by Anton Paar GmbH). Thereafter, while adjusting the temperature to 25°C with a temperature controller ("H-PTD200" and "P-PTD200" manufactured by Anton Paar GmbH),
   the stress value when the shear force (distortion) is increased from 0.01% to 1000% at a constant rate (100%/min) is continuously measured, whereby a stress-time curve is obtained (strain sweep test).
(v) The strain ratio at a time point when the slope of the obtained stress-time curve changed is taken as the "strain ratio at which the soup layer is disintegrated".

The strain ratio of the frozen soup layer used in the present invention, at which the soup layer is disintegrated, as measured by a strain sweep test at 25°C can be adjusted by controlling the kind and content of the thickener and gelling agent contained in the frozen soup layer. Specifically, when the strain ratio, at which the soup layer is disintegrated, of the frozen soup layer is to be increased, for example, the content of the gelling agent (excluding gelatin) may be increased. When the strain ratio is to be decreased, for example, the content of the gelling agent may be decreased. The strain ratio of the frozen soup layer used in the present invention, at which the soup layer is disintegrated, as measured by a strain sweep test at 25°C, can be appropriately adjusted to a particular value by these methods or the like.

According to the present invention, a frozen soup layer having a strain ratio, at which the soup layer is disintegrated, of not less than a particular value as measured by a strain sweep test at 25°C is provided. The lower limit value and the upper limit value of the strain ratio are the same as those of the frozen soup layer used for the soup base of the present invention and the preferable values are also the same.

The production method and the like of the soup prior to freezing (soup before becoming frozen soup layer by freezing) are not particularly limited, and the soup prior to freezing is prepared by a method known per se or a method analogous thereto by using water, salt and other soup materials (e.g., meat, vegetable, seafood, seasoning, fat or oil, emulsifier, antifoaming agent, thickener, gelling agent, starch, processing starch and the like) when desired. For example, the soup prior to freezing can be prepared by adding salt and other soup materials to water, heating same and the like, but the method is not limited to this method.

The weight of the frozen soup layer used in the present invention is preferably not less than 5 wt%, more preferably not less than 10 wt%, particularly preferably not less than 20 wt%, relative to that of the frozen filling-wrapping dough sheet food. When the weight is not less than 5 wt% relative to that of the frozen filling-wrapping dough sheet food, for example, even when a plurality of soup bases of the present invention are distributed in a single container, packaging bag or the like, chipping of the frozen soup layer due to collision of the soup bases can be suppressed. In addition, the soup base is easily taken out from the tray and the soup base remaining in the tray can also be reduced. The weight of the frozen soup layer used in the present invention is preferably less than 120 wt%, more preferably not more than 100 wt%, particularly preferably not more than 80 wt%, relative to that of the frozen filling-wrapping dough sheet food. When the weight is less than 120 wt% relative to that of the frozen filling-wrapping dough sheet food, the outer wrapper (dough sheet) of the filling-wrapping dough sheet food does not become too soft and affords a preferable texture. When the soup base is to be thawed by microwave heating or the like during cooking, it is thawed more easily. In addition, the soup base is easily taken out from the tray and the soup base remaining in the tray can also be reduced.

In the present invention, the frozen soup layer is attached to at least a part of the surface of the frozen filling-wrapping dough sheet food. The embodiment of the attachment of the frozen soup layer is not particularly limited and an embodiment suitable according to the kind of the filling-wrapping dough sheet food and the like may be adopted. It is preferable that the frozen soup layer does not over the entire surface of the frozen filling-wrapping dough sheet food, that is, the frozen filling-wrapping dough sheet food preferably has a part where the frozen soup layer is not attached (more preferably, part where the frozen soup layer is not substantially attached) on the surface. In the present invention, the part where the frozen soup layer "is not substantially attached" refers to the part where the frozen soup layer is not attached less the unattached part that is inevitably produced when the frozen soup layer is attached to the surface of the frozen filling-wrapping dough sheet food. The proportion of the area of the part where the frozen soup layer is not attached to the total area of the surface of the frozen filling-wrapping dough sheet food is generally 10 - 90%, preferably 20 - 80%.

The frozen soup layer is preferably attached to the bottom surface of the frozen filling-wrapping dough sheet food. In the present invention, the "bottom surface" of the frozen filling-wrapping dough sheet food varies depending on the kind, shape and the like of the filling-wrapping dough sheet food. For example, in gyoza dumpling, generally, the flat plane part facing the edge part is the bottom surface; in filling-wrapping dough sheet food with an approximately hemispherical shape such as xiaolongbao dumpling and the like, generally, the flat plane part in a circular shape is the bottom surface; and in filling-wrapping dough sheet food with a cylindrical shape such as shumai dumpling and the like, generally, any one of the parallel flat plane parts is the bottom surface. When the frozen soup layer attaches to the bottom surface of the frozen filling-wrapping dough sheet food, the frozen soup layer may attach to not only the bottom surface but also the side face continuous to the bottom surface.

The soup base of the present invention in which the frozen soup layer is attached to the bottom surface of the frozen filling-wrapping dough sheet food prevents the outer wrapper (dough sheet) of the filling-wrapping dough sheet food from becoming too soft and affords a preferable texture. In addition, it affords good appearance during eating. Also, it can be easily thawed at the time of cooking. It can also be taken out easily from the tray.

The shape of the frozen soup layer used in the present invention is not particularly limited as long as the frozen soup layer can attach to at least a part of the surface of the frozen filling-wrapping dough sheet food. For example, polyhedral shape such as cubic shape, cuboidal shape and the like, prismatic shape, cylindrical shape, truncated pyramidal shape, sheet shape, plate and the like can be mentioned. The frozen soup layer may be divided into plural (e.g., two or more) separate parts.

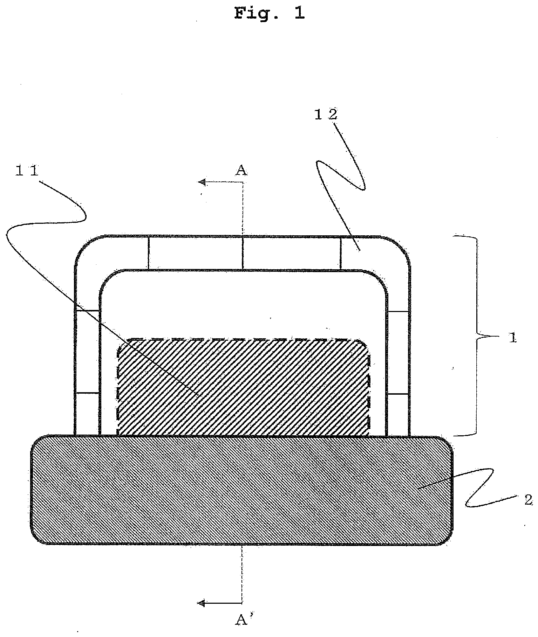

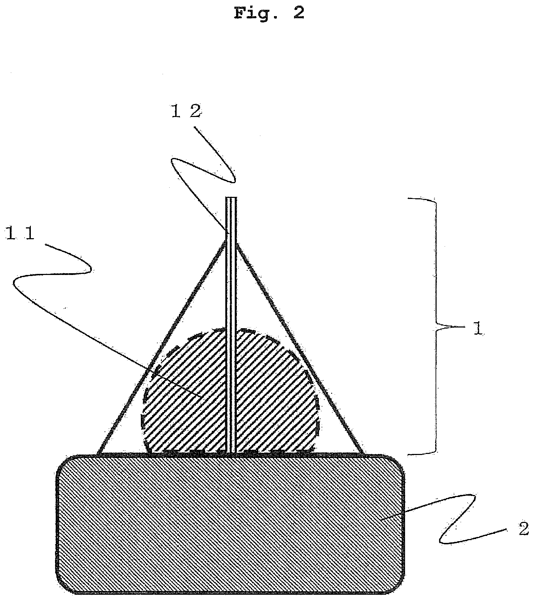

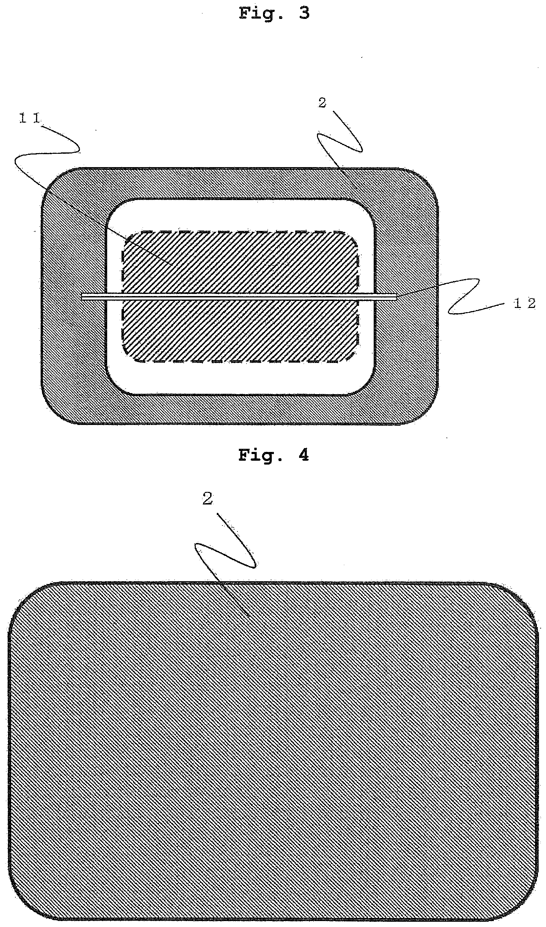

Figs. 1 - 4 are conceptual figures showing one embodiment of the soup base of the present invention. In the following, the present invention is sometimes explained by referring to the figures; however, the present invention is not limited thereto.

Each figure of the present specification is a conceptual figure in which the structure, size and the like may be different from actual ones.

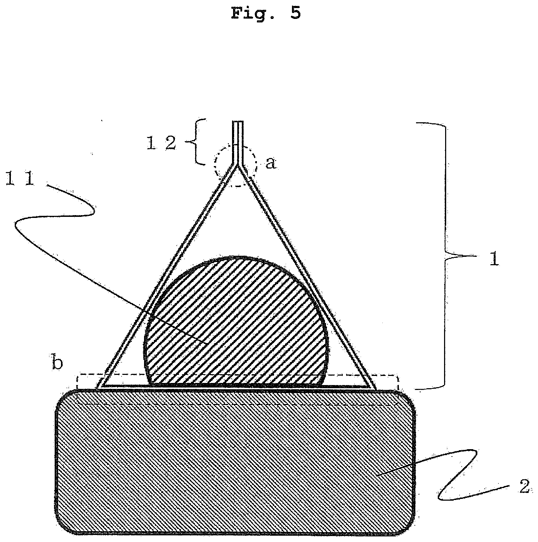

The soup base of the present invention shown in Figs. 1 - 4 is constituted of frozen gyoza dumpling 1 and frozen soup layer 2, and the frozen soup layer 2 is attached to the bottom surface of the frozen gyoza dumpling 1. In the present invention, the "bottom surface" of the frozen gyoza dumpling generally refers to, as mentioned above, a flat plane part facing the edge part. More particularly, for example, when the cross section of the trunk part of a frozen gyoza dumpling is approximately triangle with the edge part as one of the vertexes (in Fig. 5, vertex a) as shown in Fig. 5, the bottom surface means a surface containing a part to be subtense b with respect to vertex a. As used herein, the "edge part" of the frozen gyoza dumpling refers to a part where the outer wrappers are bonded and an outside part thereof.

The production method of the soup base of the present invention is not particularly limited as long as the frozen soup layer can be attached to at least a part of the surface of the frozen filling-wrapping dough sheet food. For example, a soup base in which a frozen soup layer is attached to at least a part of the surface of a frozen filling-wrapping dough sheet food can be produced by subjecting a filling-wrapping dough sheet food and a soup prior to freezing which is in contact with at least a part (preferably, bottom surface) of a surface of the filling-wrapping dough sheet food to a freezing treatment. Alternatively, a soup base in which a frozen soup layer is attached to at least a part of the surface of a frozen filling-wrapping dough sheet food can also be produced by separately subjecting a filling-wrapping dough sheet food and a soup prior to freezing to a freezing treatment, pressing the obtained frozen substance and the like.

The soup base of the present invention preferably has a concentration degree of 1- to 30-fold, particularly preferably 1- to 15-fold. In the present invention, a soup base having a concentration degree of n-fold refers to a soup base capable of providing a soup having a generally preferred salt concentration (generally 0.05 - 1.0 wt%, preferably 0.8 - 1.0 wt%) by adding (n-1) parts by weight of water to 1 part by weight of the soup base and heating the mixture. A soup base having a concentration degree of 1-fold refers to a soup base that can provide a soup having a generally preferred salt concentration by heating without adding water.

The weight of the soup base of the present invention can be appropriately adjusted according to the kind of the frozen filling-wrapping dough sheet food and the like, and is generally 5 - 50 g, preferably 5 - 30 g.

The soup base of the present invention may be provided in a package. The packaging form is not particularly limited. For example, the soup base of the present invention may be provided in an individually packaged form, a form in which a plurality (two or more) of soup bases are placed in one container, packaging bag or the like. In addition, the soup base of the present invention may be filled in a tray or the like and then packaged. The containers and packaging materials that can be used for packaging the soup base of the present invention are not particularly limited as long as they are generally used for containing or packaging foods.

The soup base of the present invention can produce a soup containing a filling-wrapping dough sheet food as an ingredient by heating (preferably, adding a predetermined amount of water or heated water and heating same). The heating method is not particularly limited and, for example, gas stove, IH stove, oven, microwave oven, microwave oven range and the like can be used for heating by a method such as direct fired heating, electric heating, hot air heating, far infrared heating, microwave heating, superheated steam heating and the like. The heating method of the soup base of the present invention is preferably microwave heating since cooking is conveniently performed. That is, the soup base of the present invention is preferably for microwave heating.

Using the soup base of the present invention, in one embodiment, a soup containing a filling-wrapping dough sheet food as an ingredient, which is superior in the texture of the outer wrapper, can be produced. The texture of the outer wrapper of the filling-wrapping dough sheet food contained in the soup can be evaluated by sensory evaluation by a panel of experts.

Using the soup base of the present invention, in one embodiment, a soup superior in the taste can be produced. The taste of the soup can be evaluated by sensory evaluation by a panel of experts.

In one embodiment, the soup base of the present invention may be a soup base easily thawed by microwave heating. Easiness of thawing the soup base by microwave heating can be evaluated by sensory evaluation by a panel of experts. For example, as in the below-mentioned Examples, a predetermined number (e.g., 3 etc.) of evaluation samples (soup base) are put in a cup, a predetermined amount (e.g., 150 g etc.) of water is poured, and the mixture is heated (e.g., 500W, 3 min 30 sec and the like) in a microwave oven. The easiness of thawing can be evaluated based on the state of the obtained soup, warmth inside the filling-wrapping dough sheet food and the like.

In one embodiment, the soup base of the present invention may be a soup base in which chipping of the frozen soup layer during distribution is suppressed. The level of chipping of the frozen soup layer during distribution of the soup base can be evaluated by, for example, as in the below-mentioned Examples, placing a predetermined number (e.g., 10 etc.) of evaluation samples (soup base) in a bag, dropping the bag from a predetermined height (e.g., 70 cm etc.) while maintaining the soup base in a frozen state, and confirming the state of the soup base and the like.

In one embodiment, the soup base of the present invention may be a soup base easily taken out from a tray. Easiness of taking out the soup base from a tray can be evaluated by, for example, as in the below-mentioned Examples, controlling the temperature of the soup base to be the evaluation sample to a predetermined temperature (e.g., -18°C etc.) while they are filled in a tray, keeping them at a predetermined temperature (e.g., 25°C etc.) for a predetermined time (e.g., 3 min etc.), taking out a predetermined number (e.g., 12 etc.) of the soup base from the tray, and evaluating them based on the easiness of taking out, soup remaining in the tray and the like.

In one embodiment, using the soup base of the present invention, a soup with good appearance during eating can be produced. The appearance of the soup during eating can be evaluated by sensory evaluation by a panel of experts. For example, when the frozen filling-wrapping dough sheet food is a frozen gyoza dumpling, the appearance can be evaluated based on the presence or absence of elongation of the edge part and the belly part of the gyoza dumpling.

In one embodiment, the soup base of the present invention may be a soup base in which melting of the soup during distribution is suppressed. Easiness of melting of the soup can be evaluated by, for example, as in the below-mentioned Examples, leaving the soup base to be the evaluation sample on an aluminum tray at a predetermined temperature (e.g., 25°C etc.) for a predetermined time (e.g., 30 min etc.) and evaluating the easiness based on the presence or absence of melting.

In one embodiment, the soup base of the present invention may be a soup base in which bumping during microwave heating is suppressed. Easiness of bumping during microwave heating can be evaluated by, for example, a predetermined number (e.g., 3 etc.) of samples (soup base) are placed in a cup with a predetermined size (e.g., diameter 150 mm x height 78 mm, and the like), pouring a predetermined amount (e.g., 150 g etc.) of water, heating same in a microwave oven (e.g., 600W, 4 min, and the like), and confirming the presence or absence of boiling over and the like.

In one embodiment, the soup base of the present invention may be a soup base in which the frozen soup layer in the unevenness (e.g., folds etc.) on the surface of a frozen filling-wrapping dough sheet food, which remained unmelted after cooking, is reduced. The degree of the frozen soup layer that remained unmelted in the unevenness on the surface of the frozen filling-wrapping dough sheet food after cooking can be evaluated by sensory evaluation by a panel of experts. For example, a predetermined number (e.g., 3 etc.) of evaluation samples (soup base) are placed in a cup, a predetermined amount (e.g., 150 g etc.) of water is poured, the mixture is heated in a microwave oven (e.g., 500W, 3 min 30 sec, and the like), and the degree can be evaluated by confirming the state of the filling-wrapping dough sheet food in the obtained soup by visual observation, eating the filling-wrapping dough sheet food and the like.

The present invention also provides a method of producing a soup, comprising heating the soup base of the present invention.

While the present invention is explained more specifically in the following Examples, the present invention is not limited in any way by the Examples.

### [Examples]

### [Experimental Example 1] Study of the amount of frozen soup layer

### (Filling-wrapping dough sheet food)

In the following Experimental Examples 1 - 5, gyoza dumpling ("meat gyoza" manufactured by Ajinomoto Frozen Food Co., Inc.) was used as the filling-wrapping dough sheet food. The weight of one gyoza dumpling was 13.5 g (filling: 7.9 g, gyoza dumpling: 5.6 g).

### (Preparation of soup prior to freezing)

Respective materials shown in the following Table 1 were mixed in a pot and sufficiently agitated to give a soup prior to freezing.

**[Table 1]**

| material | mixing ratio (wt%) |
|---|---|
| gelatin | 1.4 |
| agar | 1.5 |
| chicken powder | 20 |
| salt | 3 |
| umami seasoning (sodium glutamate etc.) | 5 |
| sesame oil | 9 |
| thickening polysaccharides (xanthan gum) | 0.1 |
| water | balance |
| total | 100 |

### (Preparation of soup base)

A soup prior to freezing in an amount shown in the following Table 2 was filled in a tray having a concave part (height: 28 mm, width: 73 mm, depth: 15 mm) with an approximately cuboidal shape.

In each tray filled with the soup prior to freezing was set a gyoza dumpling such that the bottom surface contacted the soup, and the tray was steamed at 98°C for 10 min, pre-cooled at 25°C for 10 min, and subjected to a freezing treatment (-18°C) to give a soup base (soup bases of Examples 1 - 3 and Comparative Examples 1, 2) in which a frozen soup layer was attached to the bottom surface of the frozen gyoza dumpling. In the gyoza dumpling in each soup base of Examples 1 - 3 and Comparative Examples 1, 2, the proportion of the area of the part where the frozen soup layer was not attached to the total surface area of the gyoza dumpling was about 50%.

**[Table 2]**

| | Comparative Example 1 | Example 1 | Example 2 | Example 3 | Comparative Example 2 |
|---|---|---|---|---|---|
| amount of soup prior to freezing filled (g) | 0.135 | 1.35 | 6.75 | 10.8 | 16.2 |
| weight (wt%) of frozen soup layer to frozen gyoza dumpling | 1 | 10 | 50 | 80 | 120 |

### (Evaluation of texture of outer wrapper)

Three soup bases each of Examples 1 - 3 and Comparative Examples 1, 2 were placed in a cup, water (150 g) was added and the mixture was heated (500 W, 3 min 30 sec) in a microwave oven to prepare a soup containing a gyoza dumpling as an ingredient (gyoza dumpling soup).

A panel of five experts ate each prepared soup and evaluated the texture of the outer wrapper of the gyoza dumpling according to the following evaluation criteria.

### (Evaluation criteria of texture of outer wrapper)

○: preferable
Δ: rather preferable
x: unpreferable

### (Evaluation of easiness of thawing by microwave heating)

Three soup bases each of Examples 1 - 3 and Comparative Examples 1, 2 were placed in a cup, water (150 g) was added and the mixture was heated (500 W, 3 min 30 sec) in a microwave oven to prepare a soup containing a gyoza dumpling as an ingredient (gyoza dumpling soup).

A panel of five experts evaluated the state of each prepared soup and the warmth of the gyoza dumpling according to the following evaluation criteria.

### (Evaluation criteria of easiness of thawing by microwave heating)

○: soup is sufficiently melted and gyoza dumpling is also warm inside
Δ: soup is melted but gyoza dumpling is rather cold
x: soup is not melted

### (Evaluation of chipping of frozen soup layer during distribution)

As for the degree of chipping of the frozen soup layer during distribution of the soup bases of Examples 1 - 3 and Comparative Examples 1, 2, 10 soup bases each were placed in a bag, each bag was dropped from a height of 70 cm while maintaining the soup bases in a frozen state, and the panel of five experts confirmed the state of each soup base (presence or absence of chipping, crack, etc.) and evaluated according to the following evaluation criteria.

### (Evaluation criteria of chipping of frozen soup layer during distribution)

○: frozen soup layer is hardly chipped
Δ: frozen soup layer is rather chipped
x: frozen soup layer is mostly cracked

### (Evaluation of easiness of taking out from tray)

The temperature of the soup bases of Examples 1 - 3 and Comparative Examples 1, 2 was controlled to -18°C while they were filled in a tray, and controlled to 25°C for 3 min, and 12 soup bases were each taken out from the tray. The easiness of taking out and the soup remaining in the tray were evaluated by the panel of five experts according to the following evaluation criteria.

### (Evaluation criteria of easiness of taking out from tray)

○: easily taken out from tray and soup base does not remain in tray
Δ: can be taken out from tray and soup base does not remain in tray
x: cannot be taken out unless pushed out from tray, or soup remains in tray even when taken out from tray

The results are shown in the following Table 3.

**[Table 3]**

| | Comparative Example 1 | Example 1 | Example 2 | Example 3 | Comparative Example 2 |
|---|---|---|---|---|---|
| weight (wt%) of frozen soup layer to frozen gyoza dumpling | 1 | 10 | 50 | 80 | 120 |
| texture of outer wrapper | ○ | ○ | ○ | ○ | Δ |
| easiness of thawing by microwave heating | ○ | ○ | ○ | ○ | Δ |
| chipping of frozen soup layer during distribution | x | Δ | ○ | ○ | ○ |
| easiness of taking out from tray | Δ | ○ | ○ | ○ | Δ |

As is clear from the results shown in Table 3, it was confirmed that the soup bases of Examples 1 - 3 in which the weight of the frozen soup layer was 10 - 80 wt% relative to the frozen filling-wrapping dough sheet food were superior in the texture of the outer wrapper (dough sheet) of the filling-wrapping dough sheet food, easily thawed by microwave heating, easily taken out from the tray, and suppressed chipping of the frozen soup layer during distribution.

### [Experimental Example 2] Study of salt concentration of frozen soup layer

### (Preparation of soup prior to freezing)

In the same manner as in Experimental Example 1 except that the mixing ratio of salt (salt concentration) was changed to 0 - 15 wt% as shown in the following Table 4, a soup prior to freezing was prepared.

**[Table 4]**

| | Comparative Example 3 | Example 4 | Example 5 | Example 6 | Comparative Example 4 |
|---|---|---|---|---|---|
| salt concentration (wt%) of frozen soup layer | 0 | 1 | 3 | 5 | 15 |

### (Preparation of soup base)

A soup prior to freezing having a salt concentration of 0 - 15 wt% was filled by 7.3 g in a tray having a concave part (height: 28 mm, width: 73 mm, depth: 15 mm) with an approximately cuboidal shape (weight of frozen soup layer to frozen gyoza dumpling: 54.1 wt%).

In each tray filled with the soup prior to freezing was set a gyoza dumpling such that the bottom surface contacted the soup, and the tray was steamed at 98°C for 10 min, pre-cooled at 25°C for 10 min, and subjected to a freezing treatment (-18°C) to give a soup base (soup bases of Examples 4 - 6 and Comparative Examples 3, 4) in which a frozen soup layer was attached to the bottom surface of the frozen gyoza dumpling. In the gyoza dumpling in each soup base of Examples 4 - 6 and Comparative Examples 3, 4, the proportion of the area of the part where the frozen soup layer was not attached to the total surface area of the gyoza dumpling was about 50%.

### (Evaluation of melting during distribution)

The soup bases of Examples 4 - 6 and Comparative Examples 3, 4 were left standing on an aluminum tray at 25°C for 30 min, and a panel of five experts evaluated the presence or absence of melting according to the following evaluation criteria.

### (Evaluation criteria of melting during distribution)

○: not melted
Δ: melted to show slight floating of water
x: mostly melted

### (Evaluation of taste of soup)

Three soup bases each of Examples 4 - 6 and Comparative Example 3, 4 were placed in a cup, water (150 g) was added and the mixture was heated (500 W, 3 min 30 sec) in a microwave oven to prepare a soup containing a gyoza dumpling as an ingredient (gyoza dumpling soup).

A panel of five experts ate each prepared soup and evaluated the taste of the soup according to the following evaluation criteria.

### (Evaluation criteria of taste of soup)

○: preferable
Δ: rather preferable
x: unpreferable

The results are shown in the following Table 5.

**[Table 5]**

| | Comparative Example 3 | Example 4 | Example 5 | Example 6 | Comparative Example 4 |
|---|---|---|---|---|---|
| salt concentration (wt%) of frozen soup layer | 0 | 1 | 3 | 5 | 15 |
| melting during distribution | ○ | ○ | ○ | ○ | x |
| taste of soup | x | ○ | ○ | ○ | Δ |

As is clear from the results shown in Table 5, it was confirmed that the soup bases of Examples 4 - 6 in which the salt concentration of the frozen soup layer was 1 - 5 wt% were superior in the taste of the soup and suppressed melting of the frozen soup layer during distribution.

### [Experimental Example 3] Study of mode of attachment of frozen soup layer

### (Preparation of soup prior to freezing)

In the same manner as in Experimental Example 1, a soup prior to freezing was prepared.

### (Preparation of soup base)

The soup prior to freezing was filled by 7.3 g in a tray having a concave part (height: 28 mm, width: 73 mm, depth: 15 mm) with an approximately cuboidal shape (weight of frozen soup layer to frozen gyoza dumpling: 54.1 wt%).

In the tray filled with the soup prior to freezing was immersed the entire gyoza dumpling, and the tray was steamed at 98°C for 10 min, pre-cooled at 25°C for 10 min, and subjected to a freezing treatment to give the soup base of Example 7 in which the frozen soup layer was attached to the frozen gyoza dumpling to cover its surface (that is, the surface of the frozen gyoza dumpling had a part where the frozen soup layer was not substantially attached). In the gyoza dumpling in the soup base of Example 7, the proportion of the area of the part where the frozen soup layer was not attached to the total surface area of the gyoza dumpling was about 50%.

In addition, in a tray filled with the soup prior to freezing was set a gyoza dumpling such that the bottom surface contacted the soup, and the tray was steamed at 98°C for 10 min, pre-cooled at 25°C for 10 min, and subjected to a freezing treatment to give the soup base of Example 8 in which a frozen soup layer was attached to the bottom surface of the frozen gyoza dumpling. In the gyoza dumpling in the soup base of Example 8, the proportion of the area of the part where the frozen soup layer was not attached to the total surface area of the gyoza dumpling was about 50%.

### (Evaluation of texture of outer wrapper)

Three soup bases each of Examples 7, 8 were placed in a cup, water (150 g) was added and the mixture was heated (500 W, 3 min 30 sec) in a microwave oven to prepare a soup containing a gyoza dumpling as an ingredient (gyoza dumpling soup).

A panel of five experts ate each prepared soup and evaluated the texture of the outer wrapper of the gyoza dumpling according to the following evaluation criteria.

### (Evaluation criteria of texture of outer wrapper)

++: preferable
+: rather preferable
-: unpreferable

### (Evaluation of appearance during eating)

Three soup bases each of Examples 7, 8 were placed in a cup, water (150 g) was added and the mixture was heated (500 W, 3 min 30 sec) in a microwave oven to prepare a soup containing a gyoza dumpling as an ingredient (gyoza dumpling soup).

A panel of five experts confirmed the appearance of the gyoza dumpling in each prepared soup and evaluated the presence or absence of elongation of the edge part and belly of the gyoza dumpling according to the following evaluation criteria.

### (Evaluation criteria of appearance during eating)

++: hardly elongated
+: somewhat elongated, but not concerned
-: elongated, thereafter torn or broken

### (Evaluation of easiness of thawing by microwave heating)

Three soup bases each of Examples 7, 8 were placed in a cup, water (150 g) was added and the mixture was heated (500 W, 3 min 30 sec) in a microwave oven to prepare a soup containing a gyoza dumpling as an ingredient (gyoza dumpling soup).

A panel of five experts evaluated the state of each prepared soup and the warmth of the gyoza dumpling according to the following evaluation criteria.

### (Evaluation criteria of easiness of thawing by microwave heating)

++: soup is sufficiently melted and gyoza dumpling is also warm inside
+: soup is melted but gyoza dumpling is rather cold
-: soup is not melted

### (Evaluation of easiness of taking out from tray)

The temperature of the soup bases of Examples 7, 8 was controlled to -18°C while they were filled in a tray, controlled to 25°C for 3 min, and 12 of each soup base were taken out from the tray. The easiness of taking out and the soup remaining in the tray were evaluated by the panel of five experts according to the following evaluation criteria.

### (Evaluation criteria of easiness of taking out from tray)

++: easily taken out and soup base does not remain in tray
+: can be taken out from tray and soup base does not remain in tray
-: cannot be taken out unless pushed out from tray, or soup remains in tray even when taken out from tray

The results are shown the following Table 6.

**[Table 6]**

| | Example 7 | Example 8 |
|---|---|---|
| mode of attachment of frozen soup layer | frozen soup layer attached to cover surface of frozen gyoza dumpling | frozen soup layer attached to bottom surface of frozen gyoza dumpling |
| texture of outer wrapper | + | ++ |
| appearance during eating | + | ++ |
| easiness of thawing by microwave heating | + | ++ |
| easiness of taking out from tray | + | ++ |

As is clear from the results shown in Table 6, it was confirmed that the soup base of Example 8 in which a frozen soup layer was attached to the bottom surface of the frozen gyoza dumpling was superior in the texture of the outer wrapper (dough sheet) of the filling-wrapping dough sheet food, had good appearance during eating, was easily thawed by microwave heating, and easily taken out from the tray.

### [Experimental Example 4] Study of Bostwick viscosity

### (Preparation of soup prior to freezing)

Respective materials shown in the following Table 7 were mixed in a pot and sufficiently agitated to give the soups prior to freezing of Examples 9 - 14.

**[Table 7]**

| material | mixing ratio (wt%) | | | | | |
|---|---|---|---|---|---|---|
| | Example 9 | Example 10 | Example 11 | Example 12 | Example 13 | Example 14 |
| chicken powder | 20 | | | | | |
| salt | 2 | | | | | |
| sesame oil | 3 | | | | | |
| soy sauce | 1 | | | | | |
| gelatin | 1.5 | 2.0 | 10 | | | |
| agar | 0.8 | | | | | 2.0 |
| locust bean gum | | | | 1.0 | 1.5 | |
| carrageenan | | | | | 0.75 | |
| water | balance | | | | | |
| total | 100 | | | | | |

The Bostwick viscosity of the frozen soup layers of Examples 9 - 14 at 75°C was measured by the following steps (1) - (4) and using Bostwick viscosity meter ("Bostwick consistometer" manufactured by CSC Scientific Company).
(1) The soup prior to freezing (50 mL) is filled in a 50-mL Falcon (registered trade mark) tube (manufactured by Corning Incorporated).
(2) After steaming at 98°C for 10 min, the soup is pre-cooled at 25°C for 10 min and subjected to a freezing treatment at - 18°C.
(3) The obtained frozen soup layer is controlled to 75°C in a hot-water bath and used as a measurement sample.
(4) The measurement sample (37.5 mL) is filled in a Bostwick viscosity meter ("Bostwick consistometer" manufactured by CSC Scientific Company) and the distance (cm) of moving in 60 sec is measured. The upper limit value of the moving distance is 24 cm.

The results are shown the following Table 8.

### (Preparation of soup base)

The soups prior to freezing of Examples 9 - 14 were filled by 7.3 g in a tray having a concave part (height: 28 mm, width: 73 mm, depth: 15 mm) with an approximately cuboidal shape (weight of frozen soup layer to frozen gyoza dumpling: 54.1 wt%).

In each tray filled with the soup prior to freezing of Examples 9 - 14 was set a gyoza dumpling such that the bottom surface contacted the soup, and the tray was steamed at 98°C for 10 min, pre-cooled at 25°C for 10 min, and subjected to a freezing treatment (-18°C) to give a soup base (soup bases of Examples 9 - 14) in which a frozen soup layer was attached to the bottom surface of the frozen gyoza dumpling. In the gyoza dumpling in each soup base of Examples 9 - 14, the proportion of the area of the part where the frozen soup layer was not attached to the total surface area of the gyoza dumpling was about 50%.

### (Evaluation of frozen soup layer remaining unmelted after cooking)

Three soup bases each of Examples 9 - 14 were placed in a cup, water (150 g) was added and the mixture was heated (500 W, 3 min 30 sec) in a microwave oven to prepare a soup containing a gyoza dumpling as an ingredient (gyoza dumpling soup).

A panel of five experts confirmed the appearance of the gyoza dumpling in each prepared soup and evaluated the presence or absence of the frozen soup that entered unevenness on the surface of the frozen filling-wrapping dough sheet food and remained unmelted during cooking.

### (Evaluation of frozen soup layer remaining unmelted after cooking)

- 1:: unmelted soup is found
- 2:: unmelted soup is slightly found
- 3:: unmelted soup is not found

The results are shown the following Table 8.

**[Table 8]**

| Example | Bostwick viscosity (cm/60 sec) | frozen soup layer remaining unmelted after cooking |
|---|---|---|
| 9 | 24 | 3 |
| 10 | 24 | 3 |
| 11 | 20 | 3 |
| 12 | 18 | 3 |
| 13 | 8.5 | 2 |
| 14 | 17.7 | 3 |

As is clear from the results shown in Table 8, it was confirmed that the soup bases of Examples 9 - 14 having a Bostwick viscosity of 8.5 - 24 cm/60 sec at 75°C suppressed the frozen soup that entered unevenness on the surface of the frozen filling-wrapping dough sheet food and remained unmelted during cooking.

In the measurement of Examples 9 and 10, the Bostwick viscosity immediately reached the upper limit of the measurement distance of 24 cm.

### [Experimental Example 5] Study of strain ratio at which soup layer is disintegrated

### (Preparation of soup prior to freezing)

Respective materials shown in the following Table 9 were mixed in a pot and sufficiently agitated to give the soups prior to freezing of Examples 15 - 20.

**[Table 9]**

| material | mixing ratio (wt%) | | | | | |
|---|---|---|---|---|---|---|
| | Example 15 | Example 16 | Example 17 | Example 18 | Example 19 | Example 20 |
| chicken powder | 20 | | | | | |
| salt | 2 | | | | | |
| sesame oil | 3 | | | | | |
| soy sauce | 1 | | | | | |
| gelatin | 1.5 | 10 | | | | |
| agar | 0.8 | | | | | 2.0 |
| locust bean gum | | | 1.0 | 2.0 | 1.5 | |
| carrageenan | | | | | 0.75 | |
| water | balance | | | | | |
| total | 100 | | | | | |

The strain ratio of the frozen soup layers of Examples 15 - 20, at which the soup layer was disintegrated, was measured by a strain sweep test by using a dynamic viscoelasticity measuring apparatus (manufactured by Anton Paar GmbH, Modular Compact Rheometer "MCR302"). To be specific, a strain ratio at which the soup layer was disintegrated was measured according to the following steps (i) - (v).
(i) The soup prior to freezing (50 mL) is filled in a 50-mL Falcon (registered trade mark) tube (manufactured by Corning Incorporated).
(ii) After steaming at 98°C for 10 min, the soup is pre-cooled at 25°C for 10 min and subjected to a freezing treatment at - 18°C.
(iii) The obtained frozen soup layer is cut out in a cylindrical shape with diameter 30 mm x thickness 1 mm and used as a measurement sample.
(iv) The measurement sample is sandwiched between parallel plates (diameter 25 mm) and set in a dynamic viscoelasticity measuring apparatus (manufactured by Anton Paar GmbH, Modular Compact Rheometer "MCR302"). Thereafter, the stress value when the shear force (strain) is increased from 0.01% to 1000% at a constant rate (100%/min) is continuously measured while controlling to 25°C by a temperature controller (manufactured by Anton Paar GmbH, "H-PTD200" and "P-PTD200)"), whereby a stress-time curve is obtained (strain sweep test).
(v) The strain ratio at a time point when the slope of the obtained stress-time curve changed is taken as the "strain ratio at which the soup layer is disintegrated".

The results are shown the following Table 10.

### (Preparation of soup base)

The soups prior to freezing of Examples 15 - 20 were filled by 7.3 g in a tray having a concave part (height: 28 mm, width: 73 mm, depth: 15 mm) with an approximately cuboidal shape (weight of frozen soup layer to frozen gyoza dumpling: 54.1 wt%).

In each tray filled with the soup prior to freezing was set a gyoza dumpling such that the bottom surface contacted the soup, and the tray was steamed at 98°C for 10 min, pre-cooled at 25°C for 10 min, and subjected to a freezing treatment (-18°C) to give a soup base (soup bases of Examples 15 - 20) in which a frozen soup layer was attached to the bottom surface of the frozen gyoza dumpling. In the gyoza dumpling in each soup base of Examples 15 - 20, the proportion of the area of the part where the frozen soup layer was not attached to the total surface area of the gyoza dumpling was about 50%.

### (Evaluation of melting during distribution)

The soup bases of Examples 15 - 20 were left standing on an aluminum tray at 25°C for 30 min, and a panel of five experts visually evaluated melting according to the following evaluation criteria.

### (Evaluation criteria of melting during distribution)

1: soup layer flows out and does not keep its shape
2: soup layer hardly flows out and keeps its shape
3: soup layer does not flow out at all and keeps its shape

The results are shown the following Table 10.

**[Table 10]**

| Example | strain ratio (%) at which soup layer is disintegrated | melting during distribution |
|---|---|---|
| 15 | 10 | 3 |
| 16 | 200 | 3 |
| 17 | 9 | 2 |
| 18 | 15 | 3 |
| 19 | 20 | 3 |
| 20 | 5 | 2 |

As is clear from the results shown in Table 10, it was confirmed that the soup bases of Examples 15 - 20 having a strain ratio at which the soup layer was disintegrated, as measured by a strain sweep test at 25°C, of 5 - 200% suppressed melting of the frozen soup layer during distribution.

### [Industrial Applicability]

According to the present invention, a soup containing a filling-wrapping dough sheet food as an ingredient can be produced conveniently.

This application is based on a patent application No. 2016-166194 filed in Japan (filing date: August 26, 2016), the contents of which are incorporated in full herein.

### [Explanation of Symbols]

- 1: frozen gyoza dumpling
- 11: filling
- 12: edge part
- 2: frozen soup layer

## Claims

1. A soup base comprising a frozen filling-wrapping dough sheet food, and a frozen soup layer attached to at least a part of a surface of the frozen filling-wrapping dough sheet food, wherein the weight of the frozen soup layer is not less than 5 wt% and less than 120 wt% relative to that of the frozen filling-wrapping dough sheet food, and the salt concentration of the frozen soup layer is not less than 0.5 wt% and less than 15 wt%.

2. The soup base according to claim 1, wherein the surface of the frozen filling-wrapping dough sheet food has a part to which the frozen soup layer is not attached.

3. The soup base according to claim 1 or 2, wherein the frozen soup layer is attached to a bottom surface of the frozen filling-wrapping dough sheet food.

4. The soup base according to any one of claims 1 to 3, wherein the frozen filling-wrapping dough sheet food is a frozen gyoza dumpling.

5. The soup base according to any one of claims 1 to 4, which has a concentration degree of 1- to 30-fold.

6. The soup base according to any one of claims 1 to 5, which is for microwave heating.

7. The soup base according to any one of claims 1 to 6, wherein the frozen soup layer has a Bostwick viscosity at 75°C of not less than 8 cm/60 seconds.

8. The soup base according to any one of claims 1 to 7, wherein the frozen soup layer has a strain ratio, at which the soup layer is disintegrated, of not less than 0.1% as measured by a strain sweep test at 25°C.

9. A method of producing a soup, comprising heating the soup base according to any one of claims 1 to 8.

## Patentansprüche

1. Suppenbasis, umfassend ein gefrorenes Nahrungsmittel mit teigblattumhüllter Füllung und eine gefrorene Suppenschicht, die an mindestens einem Teil einer Oberfläche des gefrorenen Nahrungsmittels mit teigblattumhüllter Füllung befestigt ist, wobei das Gewicht der gefrorenen Suppenschicht nicht weniger als 5 Gew.-% und weniger als 120 Gew.-% relativ zu dem gefrorenen Nahrungsmittel mit teigblattumhüllter Füllung beträgt, und die Salzkonzentration der gefrorenen Suppenschicht nicht weniger als 0,5 und weniger als 15 Gew.-% beträgt.

2. Suppenbasis nach Anspruch 1, wobei die Oberfläche des gefrorenen Nahrungsmittels mit teigblattumhüllter Füllung einen Teil aufweist, an dem die gefrorene Suppenschicht nicht befestigt ist.

3. Suppenbasis nach Anspruch 1 oder 2, bei der die gefrorene Suppenschicht an einer Bodenfläche des gefrorenen Nahrungsmittels mit teigblattumhüllter Füllung befestigt ist.

4. Suppenbasis nach einem der Ansprüche 1 bis 3, wobei das gefrorene Nahrungsmittel mit teigblattumhüllter Füllung ein gefrorener Gyoza-Knödel ist.

5. Suppenbasis nach einem der Ansprüche 1 bis 4, die einen Konzentrationsgrad des 1-bis 30-Fachen aufweist.

6. Suppenbasis nach einem der Ansprüche 1 bis 5, die für die Erwärmung durch Mikrowellen bestimmt ist.

7. Suppenbasis nach einem der Ansprüche 1 bis 6, wobei die gefrorene Suppenschicht eine Bostwick-Viskosität bei 75 °C von nicht weniger als 8 cm/60 Sekunden aufweist.

8. Suppenbasis nach einem der Ansprüche 1 bis 7, wobei die gefrorene Suppenschicht einen durch einen Dehnungsfegertest bei 25 °C gemessenen Dehnungsgrad, bei dem die Suppenschicht zersetzt wird, von nicht weniger als 0,1 % aufweist.

9. Verfahren zur Herstellung einer Suppe, umfassend das Erhitzen der Suppenbasis nach einem der Ansprüche 1 bis 8.

## Revendications

1. Base de soupe comprenant un aliment en feuille de pâte d'enveloppement de farce congelé, et une couche de soupe congelée attachée à au moins une partie d'une surface de l'aliment en feuille de pâte d'enveloppement de farce congelé, dans laquelle
le poids de la couche de soupe congelée n'est pas inférieur à 5 % en poids et est inférieur à 120 % en poids par rapport à celui de l'aliment en feuille de pâte d'enveloppement de farce congelé, et
la concentration de sel dans la couche de soupe congelée n'est pas inférieure à 0,5 % en poids et est inférieure à 15 % en poids.

2. Base de soupe selon la revendication 1, dans laquelle la surface de l'aliment en feuille de pâte d'enveloppement de farce congelé a une partie à laquelle la couche de soupe congelée n'est pas attachée.

3. Base de soupe selon la revendication 1 ou 2, dans laquelle la couche de soupe congelée est attachée à une surface inférieure de l'aliment en feuille de pâte d'enveloppement de farce congelé.

4. Base de soupe selon l'une quelconque des revendications 1 à 3, dans laquelle l'aliment en feuille de pâte d'enveloppement de farce congelé est un ravioli japonais congelé.

5. Base de soupe selon l'une quelconque des revendications 1 à 4, qui a un degré de concentration de 1 à 30 fois.

6. Base de soupe selon l'une quelconque des revendications 1 à 5, qui est destinée à être chauffée aux micro-ondes.

7. Base de soupe selon l'une quelconque des revendications 1 à 6, dans laquelle la couche de soupe congelée a une viscosité Bostwick à 75°C non inférieure à 8 cm/60 secondes.

8. Base de soupe selon l'une quelconque des revendications 1 à 7, dans laquelle la couche de soupe congelée a un taux de déformation, auquel la couche de soupe est désintégrée, d'au moins 0,1 %, tel que mesuré au moyen d'un test de balayage de déformation à 25°C.

9. Procédé de production d'une soupe, comprenant le chauffage de la base de soupe de l'une quelconque des revendications 1 à 8.
